Europäisches Patentamt

European Patent Office

Office européen des brevets

(19)

(11) Veröffentlichungsnummer: **0 349 777 B1**

# (12) EUROPÄISCHE PATENTSCHRIFT

(45) Veröffentlichungstag der Patentschrift :
08.05.91 Patentblatt 91/19

(51) Int. Cl.⁵ : **B30B 11/34**

(21) Anmeldenummer : 89110253.5

(22) Anmeldetag : 07.06.89

(54) **Mantelkernpresse.**

(30) Priorität : 08.06.88 DE 3819821

(43) Veröffentlichungstag der Anmeldung :
10.01.90 Patentblatt 90/02

(45) Bekanntmachung des Hinweises auf die
Patenterteilung :
08.05.91 Patentblatt 91/19

(84) Benannte Vertragsstaaten :
BE DE ES FR GB IT NL

(56) Entgegenhaltungen :
DE-B- 1 095 462
US-A- 2 946 298
US-A- 3 960 292

(73) Patentinhaber : Korsch Maschinenfabrik
Roedernallee 88-90
W-1000 Berlin 26 (DE)

(72) Erfinder : Korsch, Wolfgang, Dipl.-Ing.
Roedernallee 88-90
W-1000 Berlin 26 (DE)
Erfinder : Schmett, Michael, Dipl.-Ing.
Imchenallee 19 c
W-1000 Berlin 22 (DE)

(74) Vertreter : Lüke, Dierck-Wilm, Dipl.-Ing.
Gelfertstrasse 56
W-1000 Berlin 33 (DE)

**Beschreibung**

Die Erfindung bezieht sich auf eine Mantelkernpresse zur Herstellung ummantelter Tabletten gemäß dem Oberbegriff des Anspruches 1.

In einer Mantelkernpresse werden vorgepreßte Kerne mit einer Ummantelung aus gepreßtem Pulver versehen, wobei die Ummantelung symmetrisch zum Kern ausgeführt werden muß. Dies ist insbesondere bei Tabletten, z.B. solchen mit Retardwirkung, wichtig, da die Mantelschicht bei unterschiedlicher Dicke beim Einnehmen der Tablette zuerst an der dünnsten Stelle aufgelöst wird, wodurch die gewünschte Retardwirkung vorzeitig eintritt.

Eine Mantelkernpresse zur Herstellung ummantelter Tabletten der gattungsgemäßen Art ist aus der GB-PS 858.538 vorbekannt. Diese hat erhebliche Nachteile hinsichtlich der Überführung der Kerne aus einer Kernvorratsröhre über eine Kreisringscheibe in die Matrizen der Matrizentische. Die Kerne fallen aus der Kernvorratsröhre auf die Kreisringscheibe der Übergabeeinrichtung und werden von gabelförmigen Aufnahmeelementen übernommen, welche die Kerne in Aufnahmeöffnungen der Übergabeköpfe überführen. In diesen sind Stempel mit kurzen Verlängerungen geführt, wobei die Stempel mittels oberer Ringnocken heb- und senkbar in den Übergabeköpfen gelagert sind. Die Stempel drücken mit ihren unteren Verlängerungen auf die Kerne, die auf der Kreisringscheibe mittels der Übergabeeinrichtung geführt werden, bis die Übergabeköpfe in Deckung mit den Matrizen des Matrizentisches gebracht sind. Hierbei fallen die Kerne unter Wirkung der Stempel in die Matrizen. Vorher wird der in der Matrize geführte Unterstempel abgesenkt, und die Matrize wird mit der zur Bildung der Ummantelung dienenden Unterschicht aus Pulvermaterial angefüllt. Anschließend wird der Unterstempel noch um einen geringen Betrag weiter abgesenkt. Erst dann wird auf die in der Matrize befindliche Unterschicht der Kern aufgebracht, woraufhin der Unterstempel noch weiter abgesenkt und die Matrize mit der Oberschicht aus dem Pulvermaterial gefüllt wird. Schließlich wird die Ummantelung des Kernes mittels des in die Matrize eintauchenden Oberstempels zwischen Ober- und Unterstempel durchgeführt.

Zur genauen Positionierung des Kernes in der Unterschicht des Pulvermateriales steht bei der bekannten Mantelkernpresse nur eine sehr geringe Zeitspanne zur Verfügung, nämlich die begrenzte Zeitperiode, in welcher der Übergabekopf der Übergabeeinrichtung und die zugehörige Matrize genau konzentrisch zueinander geführt werden. Diese Zeitspanne kann bei geringen Stückzahlen von ca. 20.000 Tabletten pro Stunde, also bei langsamer Rotationsgeschwindigkeit von Übergabeeinrichtung und Matrizentisch, gerade ausreichen, um den Kern unter Eigengewicht zentrisch in die Unterschicht des Pulvermateriales innerhalb der Matrize einzubringen. Bei höheren Stückzahlen von bis zu 100.000 Tabletten pro Stunde und damit höheren Rotationsgeschwindigkeiten von Übergabeeinrichtung und Matrizentisch reicht diese kurze Zeitspanne der Überdeckung der Teilkreise von Matrize und Übergabekopf jedoch nicht aus, um den Kern mit Sicherheit zentrisch in die Unterschicht des Pulvermaterials innerhalb der Matrize einzubringen.

Darüber hinaus hat die auf den Kern einwirkende Zentrifugalkraft, die mit dem Quadrat der Rotationsgeschwindigkeit steigt, den weiteren Nachteil, daß der gegebenenfalls gerade noch zentrisch in die Matrize eingebrachte Kern auf der Unterschicht des Pulvermaterials nach außen verrutscht, so daß eine genaue Zentrierung des Kerns innerhalb der Mantelkerntablette nicht möglich ist.

Nachteilig bei der bekannten Mantelkernpresse ist somit einerseits, daß die Kerne auf der Kreisringscheibe reiben, welche ein feststehendes Bauelement darstellt, das segmentartige Einschnitte aufweist, um zwei Matrizentische aufnehmen zu können, und andererseits, daß die Kerne im wesentlichen unter Wirkung ihres Eigengewichtes aus den Übergabeköpfen in die Matrizen fallen, wodurch eine relativ langsame Umlaufgeschwindigkeit der Mantelkernpresse erforderlich wird.

Der Erfindung liegt von daher die Aufgabe zugrunde, eine Mantelkernpresse zur Herstellung ummantelter Tabletten der gattungsgemäßen Art zu schaffen, mit welcher eine genaue Zentrierung und Positionierung der Kerne in den mit einer Unterschicht an Pulvermaterial gefüllten Matrizen möglich ist.

Die Lösung dieser Aufgabe ergibt sich aus den kennzeichnenden Merkmalen des Patentanspruches 1. Erfindungsgemäß umfaßt die Einrichtung zur Aufnahme und Übergabe der Kerne an der Unterseite der heb-und senkbaren Kernstempel Greifeinrichtungen, welche die Kerne in der Aufnahmestation aufgreifen und in den Übergabebereich in die innerhalb der zugeordneten Matrize gebildete Unterschicht des Pulvermaterials zentriert eindrücken. Hierzu greifen die Unterseiten der Kernstempel selbst in die Matrizen ein, wodurch die Möglichkeit der genauen Zentrierung des Kernes innerhalb der Unterschicht des Pulvermaterials in der Matrize gegeben ist. Die Zentrierung erfolgt durch Eindrücken des Kernes in das Pulvermaterial mittels der vertikal heb- und senkbaren Übergabeköpfe, die mit Greifeinrichtungen versehen sind. Dadurch wird eine Verschiebung des in die Matrize eingebauten Kerns innerhalb der Unterschicht des Pulvermaterials unter Wirkung der Zentrifugalkraft vermieden, welche bei hohen Umlaufgeschwindigkeiten des Matrizentisches auftritt.

Mit der erfindungsgemäßen Mantelkernpresse können die Kerne mit einer Genauigkeit von ± 0,10 mm innerhalb der zu fertigenden Tablette eingepreßt werden, so daß die Wandstärke der den Kern umgebenden Mantelschicht rund um den Kern herum gleichmäßig ausgebildet werden kann. Eine wesentliche Voraussetzung für die genaue Funktion der Mantelkernpresse sind im Durchmesser im wesentlichen gleich große Teilkreise von Matrizentisch und Übergabeeinrichtung, da in diesem Fall die Umfangsgeschwindigkeiten auf den Teilkreisen gleich groß sind.

Weitere vorteilhafte Ausgestaltungen der Erfindung ergeben sich aus den weiteren Unteransprüchen. Diese betreffen eine bevorzugte Ausführungform sowie eine zweite Ausführungsform einer Mantelkernpresse.

Die Erfindung ist nachfolgend anhand von zwei Ausführungsbeispielen einer Mantelkernpresse näher erläutert. Es zeigen :

Fig. 1 einen Vertikalschnitt durch die Mantelkernpresse in der ersten Ausführungsform,

Fig. 2 einen vergrößerten Vertikalschnitt durch einen Teilbereich des Matrizentisches und einen Teilbereich der Übergabeeinrichtung der Mantelkernpresse in der ersten Ausführungsform gemäß Fig. 1,

Fig. 3 eine vergrößerte Darstellung durch einen Teilbereich der Übergabeeinrichtung und einer Aufnahmeeinrichtung der Mantelkernpresse in der ersten Ausführungsform gemäß Fig. 1,

Fig. 4 eine Draufsicht auf die Mantelkernpresse in prinzipieller Darstellung,

Fig. 5 einen Vertikalschnitt durch die Mantelkernpresse in der zweiten Ausführungsform,

Fig. 6 eine Draufsicht auf die Mantelkernpresse in der zweiten Ausführungsform gemäß Fig. 5 in prinzipieller Darstellung,

Fig. 7 einen vergrößert dargestellten Teilschnitt durch die Übergabeeinrichtung der zweiten Ausführungsform der Mantelkernpresse bei der Aufnahme eines Kernes,

Fig. 8 einen vergrößerten Detailschnitt durch die Übergabeeinrichtung der Mantelkernpresse in der zweiten Ausführungsform vor dem Einbringen eines Kernes in eine Matrize des Matrizentisches,

Fig. 9 ein vergrößertes Detail der Übergabeeinrichtung der Mantelkernpresse in der zweiten Ausführungsform beim Einlegen des Kernes in die Matrize,

Fig. 10 ein vergrößertes Detail im Bereich der sich überlappenden Teilkreise von Matrizentisch und Übergabeeinrichtung der Mantelkernpresse in der zweiten Ausführungsform,

Fig. 11 die Mantelkernpresse in der zweiten Ausführungsform mit einer geringen Abwandlung und

Fig. 12 eine Ansicht auf eine teilweise geschnitten dargestellte Mantelkerntablette.

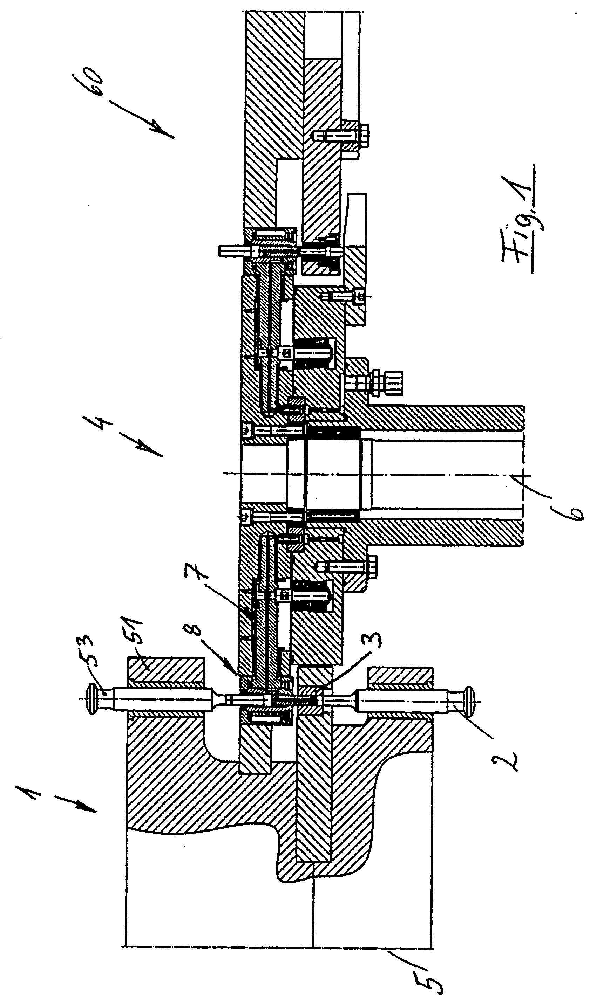

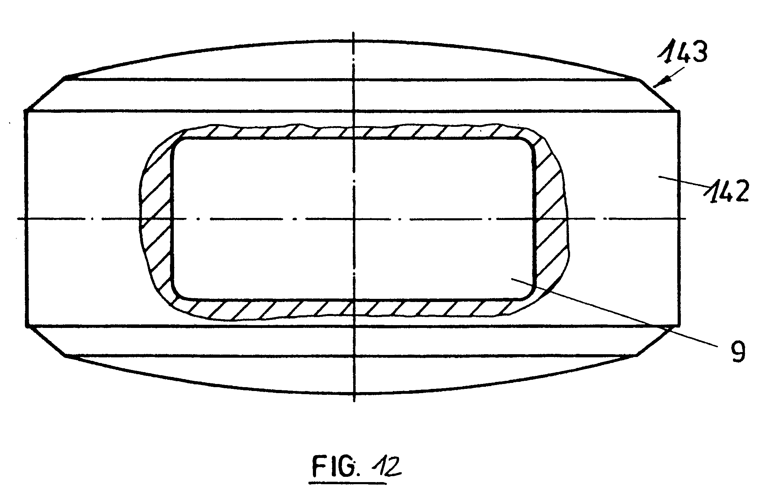

Die in den Figuren 1 bis 4 dargestellte Mantelkernpresse in der ersten Ausführungsform, die zur Herstellung von ummantelten Tabletten 143 (Fig. 12) dient, umfaßt einen drehangetriebenen Matrizentisch 1 mit auf einem Teilkreis 2 angeordneten Matrizen 3, eine Übergabeeinrichtung 4, die um eine zur Achse 5 des Matrizentisches 1 parallele Achse 6 drehangetrieben ist, und eine Aufnahmeeinrichtung 60 zur Zufuhr von Kernen 9 zu Übergabeköpfen 8, die am freien Ende von in der Übergabeeinrichtung 4 angeordneten Radialarmen 7 gelagert sind.

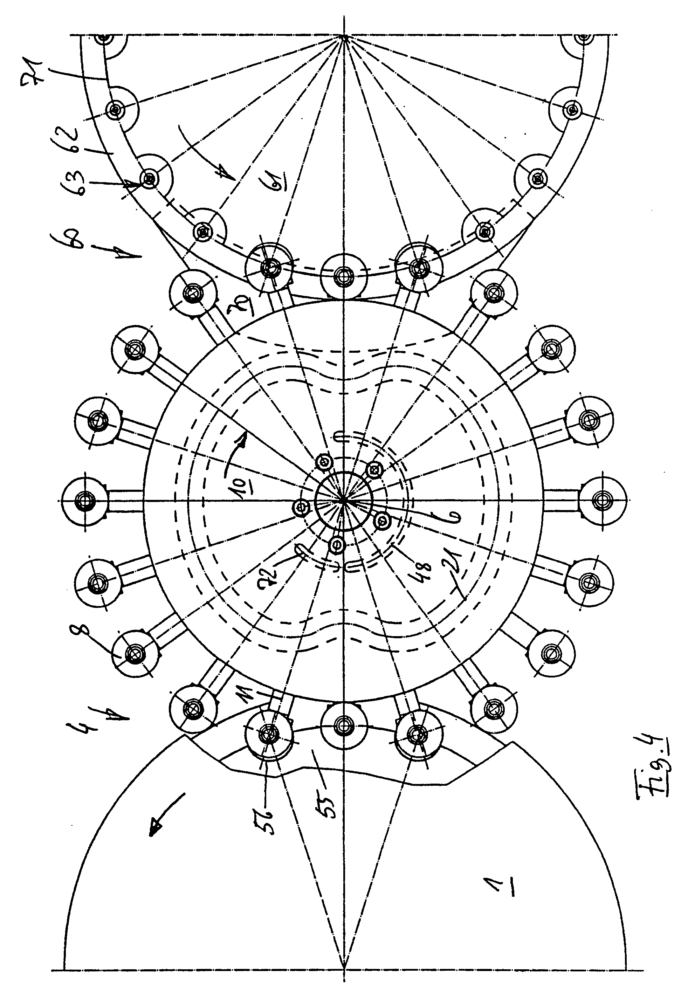

Die Übergabeeinrichtung 4 besteht aus einem um die Achse 6 drehbaren Rotor 10, an dessen Umfang eine Vielzahl von horizontalen Führungskolben 11 radial bewegbar gelagert sind, welche die Radialarme 7 bilden. Im Ausführungsbeispiel sind 20 Führungskolben 11 mit je einem Übergabekopf 8 vorgesehen, wie es in Fig. 4 in der Draufsicht dargestellt ist. Für jeden Führungskolben 11 ist innerhalb des Rotors 10 eine Radialbohrung 12 vorgesehen, in welche nahe der Achse 6 und am Außenumfang je eine Gleitlagerbuchse 13,14 eingesetzt ist, die zur Führung je eines im Querschnitt kreisrunden Führungskolbens 11 dienen. Zwischen den beiden Gleitlagerbuchsen 13,14 ist der Rotor 10 von der Unterseite her mit einer umlaufenden Nut 15 versehen, deren Oberseite mit einer Anlageplatte 16 versehen ist, gegen welche eine Führungsplatte 17 anliegt, die auf der Oberseite des Führungskolben 11 festgelegt ist. Mittels der Anlageplatte 16 und der Führungsplatte 17 erfolgt eine verdrehsichere Radialführung des Führungskolbens 11.

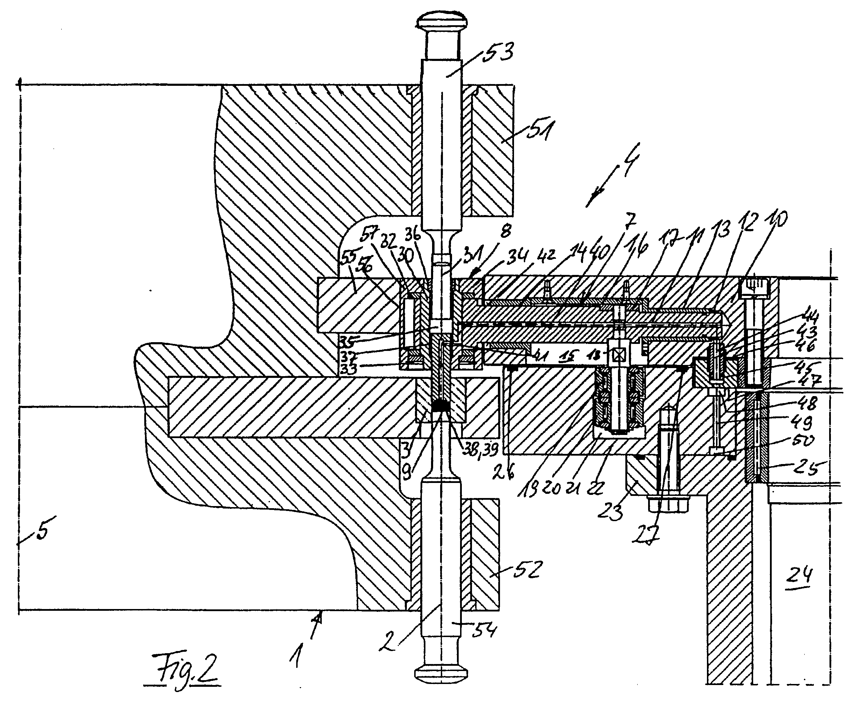

Im Bereich der Führungsplatte 17 ist der Führungskolben 11 von einem Kurvenbolzen 18 radial durchdrungen, welcher innerhalb der umlaufenden Nut 15 liegt und welcher an seinem unteren Ende mittels Stützrollen 19, 20 in eine Nutkurve 21 einer Nutkurvenscheibe 22 eingreift, welche mit einer drehfesten Säule 23 fest verbunden ist, die wiederum die Antriebswelle 24 für den Rotor 10 der Übergabeeinrichtung 4 mittels Nadellagern 25 lagermäßig aufnimmt. Die beiden Stützrollen 19, 20 greifen jeweils auf der radial äußeren bzw. radial inneren Seite der Nutkurve 21 an, wie es in Fig. 2 dargestellt ist. Die Nutkurve 21 verläuft – wie es Fig. 4 zeigt – über ihren wesentlichen Bereich konzentrisch zur Achse 6 der Übergabeeinrichtung 4. Nur im Aufnahme- und Übergabebereich der Kerne 9 nähert sich die Nutkurve der Achse 6, wie es später noch beschrieben wird.

Der Rotor 10 der Übergabeeinrichtung 4 stützt sich in axialer Richtung auf zwei Gleitschienen 26, 27 ab, die in die Oberseite der Nutkurvenscheibe 22 eingelassen sind.

An den freien, äußeren Enden der Führungskolben 11 sind die Übergabeköpfe 8 angeordnet. Diese bestehen aus einer Führungsbuchse 30, die in eine zur Achse 6 parallele Bohrung des Führungskolbens 11 eingesetzt ist, aus einem Kernstempel 31, der in der Führungsbuchse 30 geführt ist, aus zwei Führungsscheiben 32, 33, die die Führungsbuchse 30 auf der Außenseite umfassen, sowie aus einer äußeren Führungshülse 34. Der Kernstempel 31 weist etwa in seiner Längsmittelebene einen umlaufenden Bund 35 auf, der in der Führungsbuchse 30 gleitet, wohingegen der obere Stempelteil des Kernstempels 31 mittels eines Führungsringes 36 geführt ist. An der Unterseite des umlaufenden Bundes 35 stützt sich eine Druckfeder 37 ab, welche den unbelasteten Kernstempel 31 nach oben drückt. Dabei stützt sich das andere Ende der Druckfeder 37 am Boden eines innerhalb der Führungsbuchse 30 gebildeten Spaltraumes ab.

Durch den unteren Stempelteil des Kernstempels 31 verläuft axial eine Sachlochbohrung 38, die am unteren Ende des Kernstempels 31 mündet und die ein Saugrohr 39 zum Ansaugen von Kernen 9 an die Unterseite des Kernstempels 31 bildet. Durch den Führungskolben 11 hindurch erstreckt sich weiterhin eine Bohrung 40, die über axiale und radiale Verbindungsbohrungen 41, 42 mit der das Saugrohr 39 bildenden Sacklochbohrung 38 im Kernstempel 31 verbunden ist. Die Bohrung 40 durchquert auch den Kurvenbolzen 15, wie es in Fig. 2 dargestellt ist. Die Bohrung 40 mündet am inneren Ende der Radialbohrung 12 für den Führungskolben 11. In diesem Bereich mündet eine Bohrung 43, die parallel zur Achse 6 verläuft und durch eine Buchse 44 hindurchgeht, die in eine Vakuumscheibe 45 und in den Rotor 10 eingesetzt ist.

Eine Druckfeder 46, die in einem die Buchse 44 umgebenden Spalt angeordnet ist, drückt die Vakuumscheibe 45 gegen die Oberfläche einer Eindrehung 47 innerhalb der Nutkurvenscheibe 22. Innerhalb der Eindrehung 47 ist eine nutartige Vakuumkammer 48 ausgebildet, die über einen Umfangs-Teilbereich der Nutkurvenscheibe 22 verläuft, wie es in Fig. 4 dargestellt und später noch erläutert werden wird. Von der nutartigen Vakuumkammer 48 verläuft eine Bohrung 49 zu einer Vakuumzuführleitung 50. Alle Bohrungen und Bauteile, die mit den Bezugszahlen 38 bis 50 bezeichnet sind, bilden in ihrer Gesamtheit eine Unterdruckeinrichtung 29 zur gesteuerten Zufuhr eines Vakuums, das am freien Ende des Saugrohres 39 des Kernstempels 31 zum Ergreifen eines Kernes 9 dient.

Der mit einer Vielzahl von Matrizen 3 bestückte Matrizentisch 1 ist mit einer oberen und einer unteren Führungsscheibe 51, 52 versehen, in denen konzentrisch zu den Achsen der Matrizen 3 Oberstempel 53 bzw. Unterstempel 54 geführt sind, die durch nicht näher dargestellte Kurven gesteuert werden und die innerhalb der Matrizen 3 in diese eingefülltes Pulvermaterial 144 zur Ummantelung der Kerne 9 zur Bildung der Mantelkerntabletten 143 verpressen. Zusätzlich dienen die Oberstempel 53 bei der ersten Ausführungsform der Mantelkernpresse dazu, den Kernstempel 31 beim Einlegen eines Kernes 9 in eine Matrize 3 zu beaufschlagen und gegen die Wirkung der Druckfeder 37 einen Kern 9 in die innerhalb der Matrize 3 auf dem Unterstempel 54 gebildete Unterpulverschicht einzudrücken.

Zwischen der oberen Führungsscheibe 51 und dem Matrizentisch 1 ist ein Kopfführungskranz 55 angeordnet, der drehfest mit dem Matrizentisch 1 verbunden und auf dem Teilkreis 2 des Matrizentisches 3 mit halbkreisförmigen Kopf aufnahmemulden 56 versehen ist, die koaxial zu den Matrizen 3 ausgerichtet sind und in welche die entsprechend kreisförmig ausgebildeten Kopfteile 57 der Übergabeköpfe 8 der Führungskolben 11 drehend – gleitend eingreifen. Dabei ist vorgesehen, daß der Teilkreis, auf dem sich die Achsen der Übergabeköpfe 8 der Radialarme 7 bzw. Führungskolben 11 in ihrer radial ausgefahrenen Stellung bewegen, und der Teilkreis 2 der Matrizen 3 des Matrizentisches 1 sich mindestens um den Abstand zweier Matrizen 3 überlappen, wie es in der Fig. 4 näher dargestellt ist. Hierbei werden die Übergabeköpfe 8 im Überlappungsbereich der Teilkreise auf dem Teilkreis 2 des Matrizentisches 1 geführt, wie es später noch näher erläutert werden wird.

Die dem Matrizentisch 1 über die Übergabeeinrichtung 4 diametral gegenüberliegende Aufnahmeeinrichtung 60 umfaßt einen Kopfführungskranz 61, der entsprechend dem Kopfführungskranz 55 des Matrizentisches 1 mit halbkreisförmigen Kopfaufnahmemulden 56 versehen ist, in welche die kopfförmigen Führungshülsen 57 der Übergabeköpfe 8 drehend-gleitend eingreifen. Die Führungsscheibe 61 ist mit einer Aufnahmescheibe 62 für die Kerne 9 fest verbunden, welche zwanzig Aufnahmenester 63 für Kerne 9 aufweist. Diese Aufnahmenester 63 bestehen aus einer äußeren Führungsbuchse 64, die fest in eine Axialbohrung der Aufnahmescheibe 62 eingeschraubt ist, einem hohlen Außenstempel 65, der in der Führungsbuchse 64 geführt ist, und einem Innenstempel 66, der wiederum im Außenstempel 65 geführt ist. Zwischen der äußeren Führungsbuchse 64 und dem Außenstempel 65 sind eine innere und eine äußere Druckfeder 67, 68 angeordnet, die den Innenstempel 66 bzw. den Außenstempel 65 beaufschlagen. Der untere Teil des Innenstempels 66 ist in einer Führungsplatte 69 geführt, die zusammen mit der Führungsbuchse 64 in der Aufnahmescheibe 62 verschraubt ist.

Auf der Unterseite der Nutkurvenscheibe 22 ist im Bereich der Aufnahmeeinrichtung für die Kerne 9 eine Hubkurve 70 unterseitig angeschraubt, auf welcher die Innenstempel 66 zur Aufnahme eines Kernes 9 in einen Übergabekopf 8 geführt sind.

Die Wirkungsweise der Mantelkernpresse in der bisher beschriebenen Ausführungsform ist folgende :

Auf die Oberseite der Aufnahmescheibe 62 werden in nicht näher dargestellter Weise Kerne 9 aufgebracht, die auf die einzelnen Aufnahmenester 63 verteilt werden. Dabei sind der Außen- und der Innenstempel 65, 66 unter Wirkung der Federn 67, 68 unterhalb der Oberfläche der Aufnahmescheibe 62 befindlich. Beim Auffahren des Innenstempels 66 auf die Hubkurve 70 wird zunächst der Innenstempel 66 geringfügig angehoben, so daß der auf dieser befindliche Kern 9 etwas über die Oberkante des Außenstempels 66 angehoben wird. Erst anschließend wird – verzögert durch die zwischen-geschaltete Innenfeder 68 – auch der Außenstempel 65 mit angehoben.

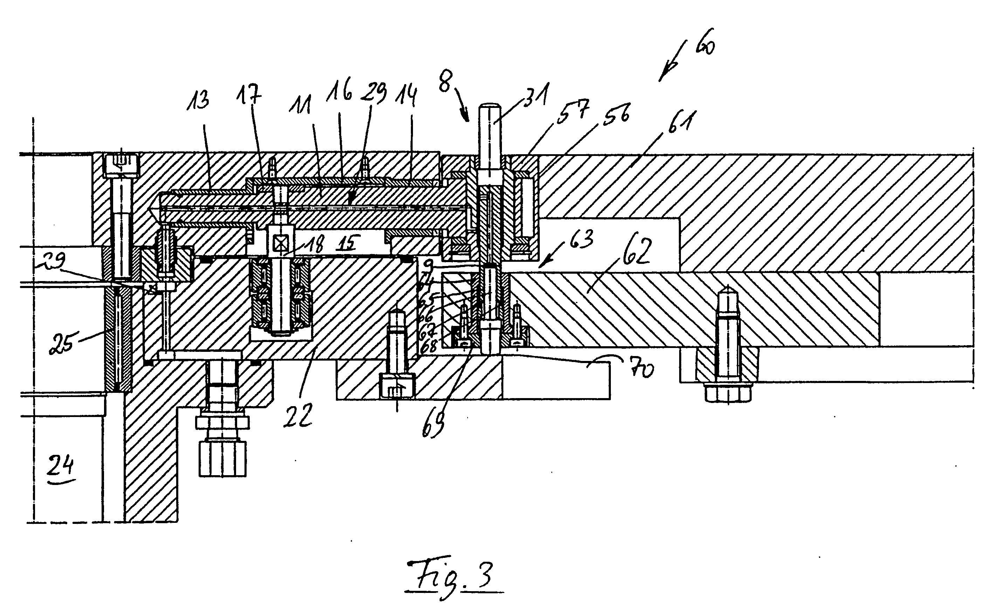

Nunmehr kommt der zugehörige Übergabekopf 8 unter Wirkung des mit seinen Stützrollen 19, 20 in die Nutkurve 21 eingreifenden Kurvenbolzens 18 und des zugehörigen Führungskolbens 11 in eine mit dem Teilkreis 71 der Aufnahmenester 63 exakt übereinstimmende Bahn, so daß über einen bestimmten Drehbereich der Aufnahmescheibe 62 ein Kernstempel 31 in Deckung mit dem Außen- und Innenstempel 65, 66 gebracht wird, wie es in Fig. 3 dargestellt ist. Unter Wirkung der Unterdruckeinrichtung 29 wird der Kern 9 von der Unterseite des Kernstempels 11 unter Ein wirkung des Vakuums, das innerhalb des Saugrohres 39 aufgebaut wird, ergriffen und während des Absenkens von Außen- und Innenstempel 65, 66 in Drehrichtung der Übergabeeinrichtung 4 weitergeführt.

Die Übergabe des Kernes 9 vom Übergabekopf 8 an die zugehörige Matrize 3 des Matrizentisches 1 erfolgt dann dadurch, daß nach einer Umdrehung des Rotors 10 der Übergabeeinrichtung 4 von ungefähr 180° der Übergabekopf 8 unter Steuerung durch den in der Nutkurve 21 geführten Kurvenbolzen 18 in eine Kurvenbahn gebracht wird, die mit dem Teilkreis 2 der Matrizen 3 des Matrizentisches 1 übereinstimmt. Sobald sich der Kernstempel 31 des Übergabekopfes 8 mit dem an der Unterseite des Kernstempels 9 unter Vakuum gehaltenen Kern 9 oberhalb der zugeordneten Matrize 3 befindet, wird der Kernstempel 31 unter Wirkung des Oberstempels 53 in die Matrize 3 eingedrückt, wobei der Kern 9 in die bereits in der Matrize 3 befindliche Pulverschicht genau zentriert eingedrückt wird. Das Vakuum wird mittels einer Entlüftungskammer 72 schlagartig aufgehoben, woraufhin der Kernstempel 31 den Kern 9 freigibt.

Der Kernstempel 31 kann nun nach Freigabe durch den Oberstempel 53 unter Wirkung der Druckfeder 37 wieder aus der Matrize 3 herausgeführt werden, woraufhin der zugehörige Führungskolben 11 mittels des zugeordneten Kurvenbolzens 18 und der Nutkurve 21 wieder ausgefahren wird.

Die Steuerung der Führungskolben 11 und der an diesen angebrachten Übergabeköpfen 8 mit Kernstempeln 31 erfolgt im wesentlichen durch die Nutkurve 21 und die in diese eingreifenden Kurvenbolzen 18. Nur zur genauen registerhaltigen Überdeckung von Kernstempel 31 einerseits mit dem Außen/Innenstempel 65, 66 der Aufnahmeeinheit 60 und andererseits mit den Matrizen 3 des Matrizentisches 1 kommen die Übergabeköpfe 8 mit ihren Führungshülsen 57 in Eingriff mit den Kopfführungskränzen 55 des Matrizentisches 1 bzw. 61 der Aufnahmeeinheit 60.

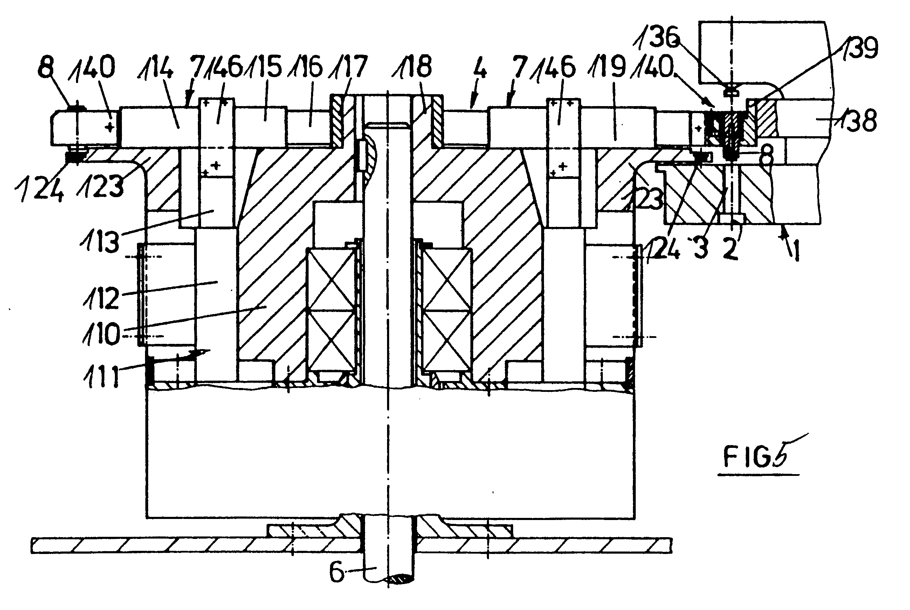

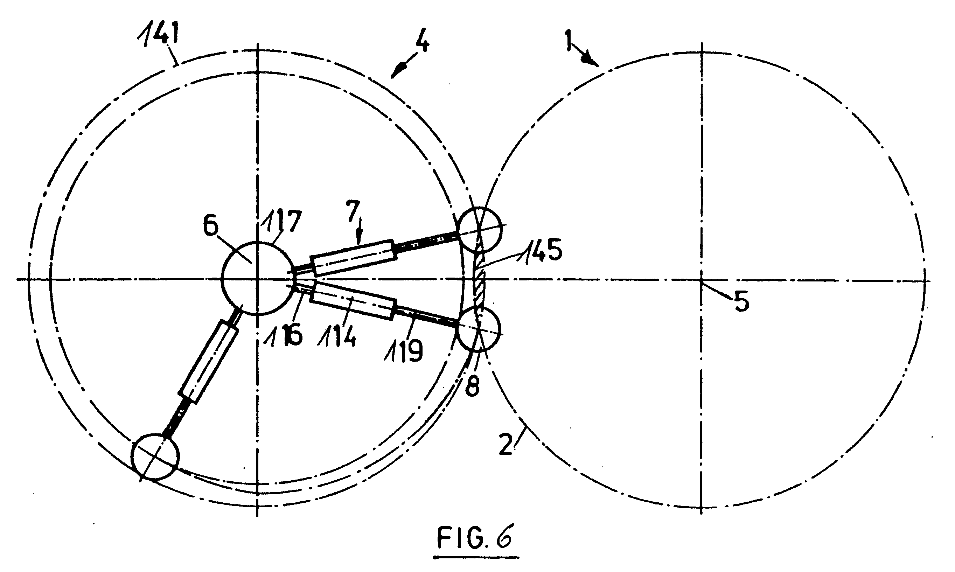

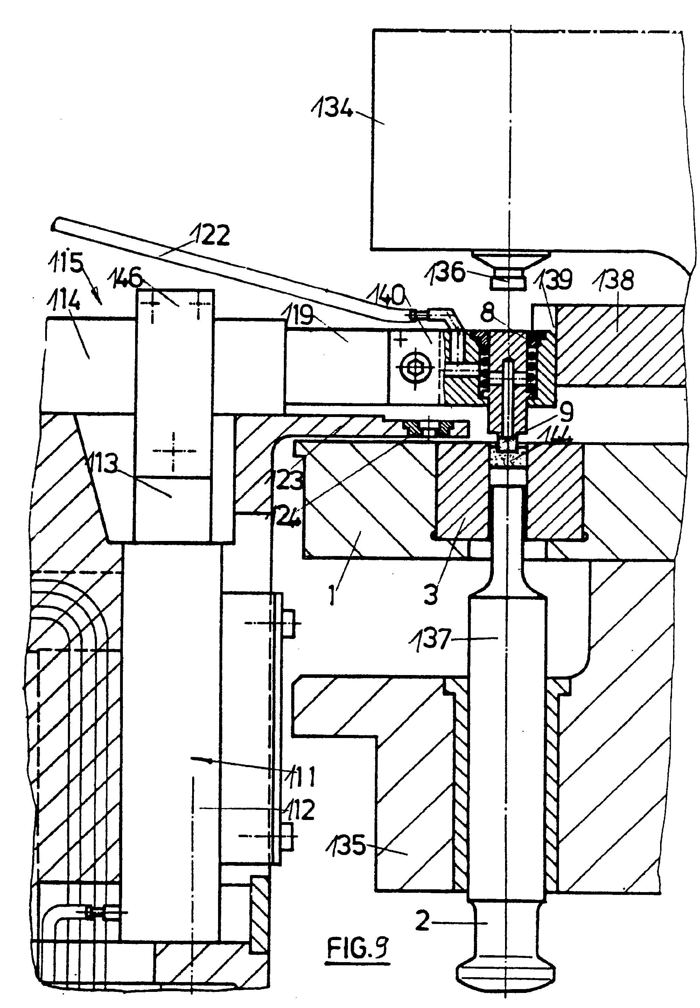

Die Mantelkernpresse in der in den Figuren 5 bis 11 dargestellten zweiten Ausführungsform umfaßt in entsprechender Weise einen drehangetriebenen Matrizentisch 1 mit auf dem Teilkreis 2 angeordneten Matrizen 3 und eine Übergabeeinrichtung 4, die um eine zur Achse 5 des Matrizentisches 1 parallele Achse 6 drehangetrieben und mit Radialarmen 7 versehen ist, in deren Kopfteilen 140 radial bewegbare Übergabeköpfe 8 gelagert sind, die zur Übergabe der Kerne 9 mit den Matrizen 3 in Deckung bringbar sind.

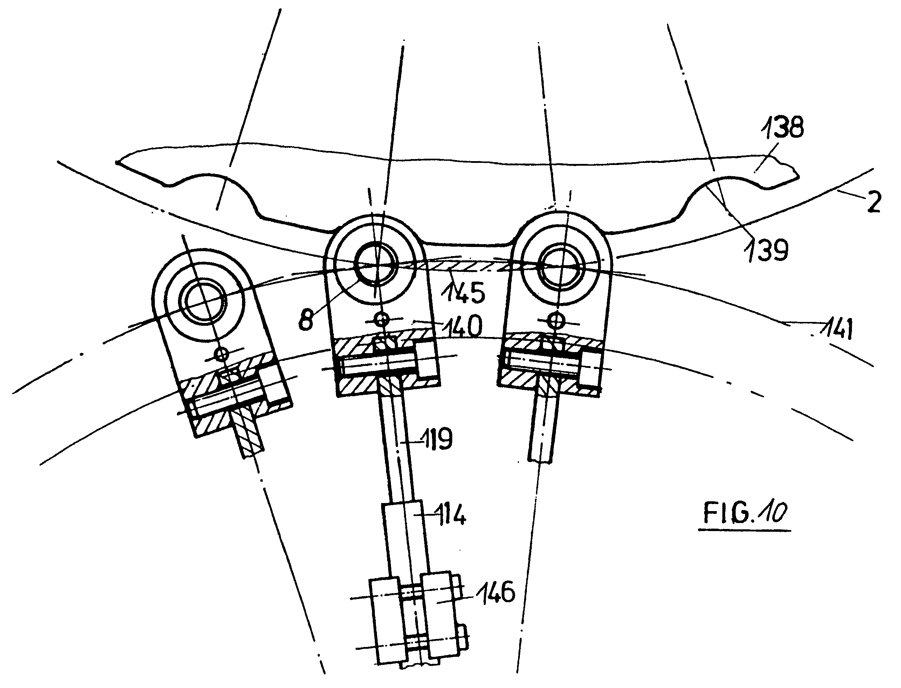

Die Übergabeeinrichtung 4 besteht aus einem um die Achse 6 drehbar gelagerten Rotor 110, an dessen Umfang eine Vielzahl von vertikalen Zylinderkolbeneinheiten 111 angeordnet ist, deren Zylinder 112 fest mit dem Rotor 110 verschraubt sind. Die Kolbenstangen 113 der vertikalen Zylinderkolbeneinheiten 111 tragen an ihren freien Enden über an diese angeschraubte Klemmstücke 146 die von diesen klemmendgehaltenen Zylinder 114 von horizontalen Zylinderkolbeneinheiten 115, wobei sich die Zylinder 114 über Distanzstücke 116 an einem Zentrierstück 117 gleitbar abstützen, das konzentrisch zur Achse 6 der Übergabeeinrichtung 4 an einem axialen Ansatz 118 des Rotors 110 gelagert ist. Das Zentrierstück 117 besteht vorzugsweise aus Bronze. An den freien Enden der Kolbenstangen 119 der horizontalen Zylinderkolbeneinheiten 115 sind die Kopfteile 140 mit den eingesetzten Übergabeköpfen 8 angeschraubt. Die freien Enden der angeschraubten Kopfteile 140 sind ferner halbkreisförmig ausgerundet, wie es in Fig. 10 dargestellt ist, wobei die Kreismittelpunkte genau in den Achsen der Übergabeköpfe 8 liegen.

Die Zylinder 112 der vertikalen Zylinderkolbeneinheiten 111 werden über Leitungen 120 und die Zylinder 114 der horizontalen Zylinderkolbeneinheiten 115 über Leitungen 121 mit Druckluft versorgt. Die Leitungen 120, 121 sind in nicht näher dargestellter Weise an Steuerventile angeschlossen, die zu einer Steuereinrichtung geführt sind. Auf diese Weise können die Kolbenstangen 113 und 119 unabhängig voneinander gesteuert auf- und abbewegt bzw. aus- und eingefahren werden.

Weitere Leitungen 122 sind zu den Übergabeköpfen 8 geführt und an Unterdruckeinrichtungen angeschlossen, die wiederum von der nicht dargestellten Steuereinrichtung betätigt werden.

Der Rotor 110 der Übergabeeinrichtung 4 ist mit einer außerhalb der vertikalen Zylinderkolbeneinheiten 111 im Bewegungsbereich der Übergabeköpfe 8 befindlichen Kreisringscheibe 123 versehen, die den Radialarmen 7 zugeordnete Aufnahmenester 124 trägt. Die Aufnahmenester 124 liegen im Bewegungsbereich der Übergabeköpfe 8 und dienen zur Aufnahme der Kerne 9, welche von einer nicht näher dargestellten Zuführeinrichtung auf der den Matrizentisch 1 abgelegenen Seite der Übergabeeinrichtung 4 zugeführt werden.

Die Übergabeköpfe 8 sind im Querschnitt kreisrund aus metallischem Vollmaterial ausgebildet und etwas unterhalb ihrer mittleren Querachse mit einem radial auswärts gerichteten Bund 125 versehen. Die Übergabeköpfe 8 sind in zur Achse 6 der Übergabeeinrichtung 4 parallele Bohrungen 126 eingesetzt, deren Durchmesser etwas größer ist als der Durchmesser des Bundes 125. Die Bohrungen sind am oberen Ende mit kreisringsförmigen Flanschen 127 versehen, welche die Übergabeköpfe 8 führen. Zwischen dem Bund 125 und dem Flansch 127 eines jeden Übergabekopfes 8 ist eine Druckfeder 128 eingesetzt, die jeden Übergabekopf 8 in seiner radial nach außen geführten Stellung hält.

In die Unterseite eines jeden Übergabekopfes 8 ist eine sich axial und zentrisch erstreckende Sacklochbohrung 129 eingebracht, die mit einer Querbohrung 130 in Verbindung steht, die in den die Druckfeder 128 aufnehmenden Ringraum 131 mündet. Von diesem geht eine Radialbohrung 132 aus, in welche die Unterdruckleitung 122 über einen Anschlußstutzen 133 mündet. Da der Gleitsitz des aus rundem Vollmaterial gebildeten Übergabekopfes 8 zwischen dem Material des Kopfteiles 140 einerseits und dem Material des kreisringförmigen Flansches 127 andererseits weitgehend gasdicht ausgeführt ist, kann die sich vertikal erstreckende Bohrung 129 innerhalb eines jeden Übergabekopfes 8 als Saugrohr zum Ansaugen der Kerne 9 an der Unterseite der Übergabeköpfe 8 unter Wirkung eines mittels der Leitung 122 aufzubauenden Ungerdruckes dienen.

Der mit einer Vielzahl von Matrizen 3 bestückte Matrizentisch 1 ist mit einer oberen und einer unteren Führungsscheibe 134, 135 versehen, die denen konzentrisch zu den Achsen der Matrizen 3 geführte Oberstempel 136 bzw. Unterstempel 137 geführt sind, die durch nicht näher dargestellte Kurven gesteuert werden und die innerhalb der Matrizen 3 in diese eingefüllte Pulvermaterial 144 zur Ummantelung der Kerne 9 zur Bildung der Mantelkern-Tabletten 143 verpressen.

Zwischen der oberen Führungsscheibe 134 und dem Matrizentisch 1 ist ein Kopfführungskranz 138 angeordnet, der drehfest mit dem Matrizentisch 1 verbunden und der auf dem Teilkreis 2 des Matrizentisches 1 mit halbkreisförmigen Kopfaufnahmemulden 139 versehen ist, die koaxial zu den Matrizen 3 ausgerichtet sind und in welche die entsprechend halbkreisförmig ausgebildeten Kopfteile 140 der Radialarme 7 drehend – gleitend eingreifen. Dabei ist vorgesehen, daß der Teilkreis 141, auf dem sich die Achsen der Übergabeköpfe 8 der Radialarme 7 in ihrer radial ausgefahrenen Stellung bewegen, und der Teilkreis 2 der Matrizen 3 des Matrizentisches 1 sich mindestens um den Abstand zweier Matrizen 3 überlappen, wie es in Fig. 10 näher dargestellt ist. Hierbei werden die Übergabeköpfe 8 im Überlappungsbereich 145 der Teilkreise 2, 141 auf dem Teilkreis 2 des Matrizentisches 1 geführt, wie es nachstehend näher erläutert werden wird.

Die Funktion der in den Figuren 5 bis 11 dargestellten zweiten Ausführungsform einer Mantelkernpresse ist folgende :

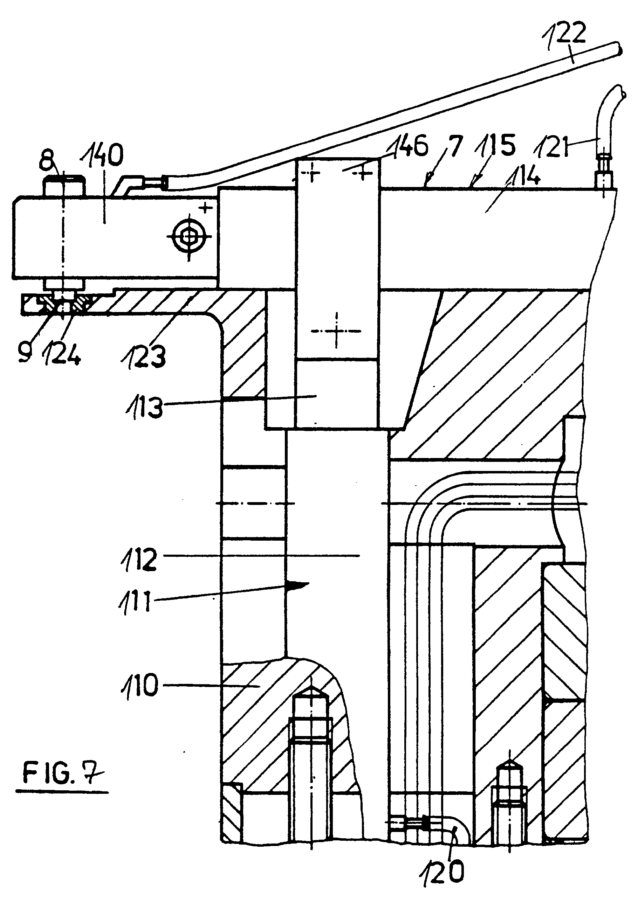

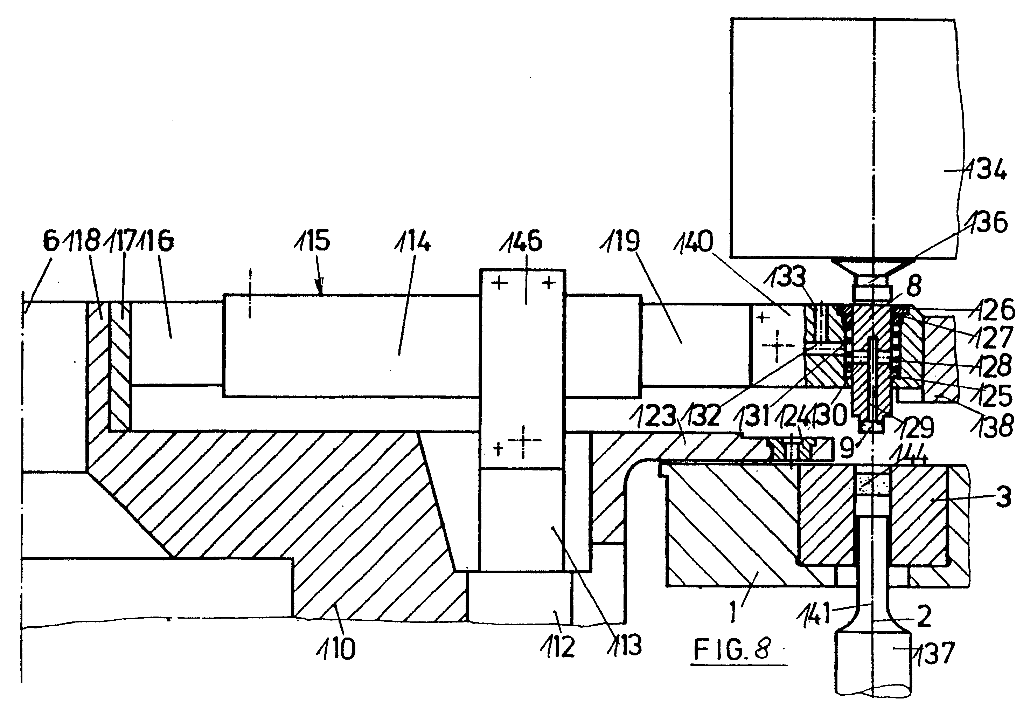

Von einer nicht näher dargestellten Führungseinrichtung werden die mit einer Ummantelung 142 zu versehenden Kerne 9 den Aufnahmenestern 124 der Kreisringscheibe 123 der Übergabeeinrichtung 4 zugeführt. Wie es in Fig. 7 näher dargestellt ist, fährt der Radialarm 7 unter Wirkung der vertikalen Zylinderkolbeneinheit 111 nach unten, wobei der Übergabekopf 8 gegen die Wirkung der Druckfeder 128 in das Kopfteil 140 eingedrückt wird. Der auf seiner Unterseite bereits mit der Kontur des zu übernehmenden Kernes 9 versehene Übergabekopf 8 übernimmt den Kern 9 aus dem Aufnahmenest 124 unter Wirkung des mittels des Saugrohres 129 aufgebauten Vakuum-Saugunterdruckes. Während der Rotation des Rotors 110 der Übergabeeinrichtung 4 wird der Radialarm 7 nun mittels der vertikalen Zylinderkolbeneinheit 111 angehoben, wobei der Übergabekopf 8 aus dem Kopfteil 140 nach unten ausfährt. Anschließend wird der Übergabekopf 8 unter Wirkung der horizontalen Zylinderkolbeneinheit 115 radial nach außen gefahren, wie es in Fig. 8 dargestellt ist. Der Übergabekopf 8 rotiert nun auf seinem Teilkreis 141. Sobald nun der Übergabekopf 8 die zugehörige Matrize 3 des Matrizentisches 1 erreicht, gelangt das Kopfteil 140 des Radialarmes 7 in eine Kopfaufnahmemulde 139 des Kopfführungskranzes 138. Diese führt den Übergabekopf 8 über den Abstand zweier benachbarter Matrizen 3 exakt entlang des Teilkreises 2 des Matrizentisches 1, solange bis der zweite Schnittpunkt der Teilkreise 2, 141 erreicht ist. Während dieses Weges unter Überlappung der Teilkreise 2, 141 wird eine erhebliche Zeitspanne gewonnen, um den Übergabekopf 8 in die Matrize 3 abzusenken, den Kern 9 abzulegen und den Übergabekopf 8 wieder anzuheben, woraufhin eine Trennung zwischen dem Kopfteile 140 des Radialarmes 7 und dem Kopfführungskranz 138 erfolgt.

Vor dem Absenken des Übergabekopfes 8 in die Matrize 3 ist in dieser auf dem Unterstempel 137 die Unterschicht 144 des Pulvermateriales für die Ummantelung 142 der zu pressenden Tablette 143 eingebracht worden. In diese Unterschicht 144 wird der Kern 9 mittels des Übergabekopfes 8 eingedrückt, in dem die vertikale Zylinderkolbeneinheit 111 eine Bewegung nach unten ausführt. Anschließend wird der Übergabekopf 8 durch Anheben des Radialarmes 7 mittels der vertikalen Zylinderkolbeneinheit 111 wieder aus der Matrize 3 herausgehoben. Durch dieses Eindrücken des Kernes 9 in das Pulvermaterial der Unterschicht 144 wird verhindert, daß der Kern 9 unter Wirkung der Zentri fugalkraft des mit hoher Drehzahl rotierenden Matrizentisches 1 aus seiner zentrierten Lage innerhalb der Matrize 3 radial nach außen wandern kann.

Die Vervollständigung der Tablette 143 erfolgt anschließend durch weiteres Absenken des Unterstempels 137 in die Matrize 3, anschließendes Einbringen einer Oberschicht des Pulvermaterials in die Matrize 3 und Fertigpressen der Tablette 143 mittels des in die Matrize 3 eintauchenden Oberstempels 136. Die fertige Mantelkern-Tablette 143 ist in Fig. 12 dargestellt.

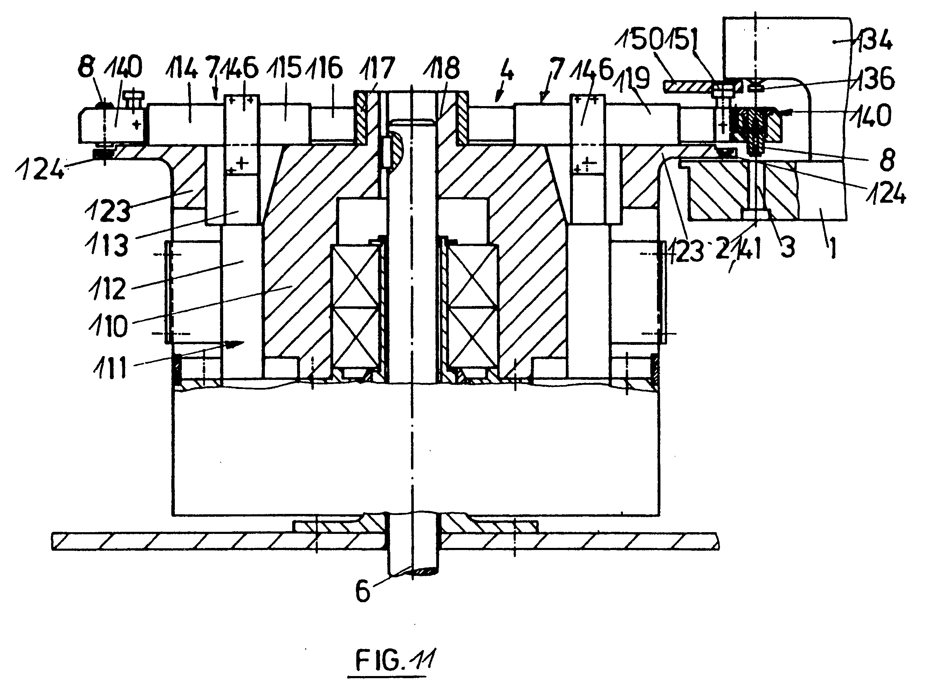

Bei der in Fig. 11 dargestellten Ausführungsform ist der Übergabeeinrichtung 4 eine drehfest angeordnete Führungskurve 150 zugeordnet, die im Überlappungsbereich der Teilkreise 2, 141 parallel zum Teilkreis 2 des Matrizentisches 1 angeordnet ist. Zur Führung der Radialarme 7 an der Führungskurve 150 sind an den Radialarmen 7 Rollen 151 angeordnet, die entlang der Führungskurve 150 geführt sind.

Eine wesentliche Voraussetzung für die genaue Funktion der Mantelkernpresse beider Ausführungsformen sind gleiche Umfangsgeschwindigkeiten der Matrizen 3 und der Übergabeköpfe 8 und gleiche Abstände zwischen den Matrizen 3 und den Übergabeköpfen 8 in dem Überlappungsbereich 145 auf den diese verbindende Sehnen.

## Ansprüche

1. Mantelkernpresse zur Herstellung ummantelter Tabletten, aus einem drehangetriebenen Matrizentisch (1) mit auf einem Teilkreis angeordneten Matrizen (3),
   aus einer um eine zur Matrizentischachse (5) parallelen Achse (6) drehangetriebenen Übergabeeinrichtung mit radial bewegbaren Armen (7) und mit an deren freien Enden gelagerten, zur Übergabe der Kerne mit den Matrizen (3) in Deckung bringbaren Übergabeköpfen (8) und aus einer mit einem die Kerne beaufschlagenden Stempel (31) versehenen Einrichtung zur Aufnahme und Übergabe der Kerne, wobei die Teilkreise des Matriznztisches und der Übergabeeinrichtung (4) im Übergabebereich überlappt und die Übergabeeinrichtung (4) im Überlappungsbereich auf dem Teilkreis des Matrizentisches (1) geführt ist, **dadurch gekennzeichnet**, daß die Einrichtung zur Aufnahme und Übergabe der Kerne aus heb-und senkbaren Kernstempeln (31) gebildet ist,
   daß die Kernstempel an ihren Unterseiten Greifeinrichtungen aufweisen, welche die Kerne (9) in der Aufnahmestation (60) aufgreifen und in dem Übergabebereich in die innerhalb der zugeordneten Matrize (3) gebildete Unterschicht des Pulvermateriales einbringen,und

daß die Kernstempel (31) zum Eindrücken der Kerne (9) in die Unterschicht des Pulvermateriales von den Oberstempeln (53) beaufschlagbar sind.

2. Mantelkernpresse nach Anspruch 1, wobei die Greifeinrichtungen Saugrohre und an diese angeschlossene Unterdruckeinrichtungen umfassen, dadurch gekennzeichnet, daß die Saugrohre (38, 129) innerhalb der Kernstempel (31) ausgebildet sind und an der Unterseite der Kernstempel (31) münden.

3. Mantelkernpresse nach Anspruch 1 oder 2, dadurch gekennzeichnet, daß die Kernstempel (31) in Bohrungen der Radialarme (7) bzw. Führungskolben (11) geführt und durch Druckfedern (37) beaufschlagt sind, welche die Unterseite der Kernstempel (31) über die Ebene des Matrizentisches (1) anheben.

4. Mantelkernpresse nach einem der Ansprüche 1 bis 3, dadurch gekennzeichnet, daß die Führungskolben (11) mit Kurvenbolzen (18) versehen sind, die in einer ortsfesten Nutkurvenscheibe (22) geführt sind.

5. Mantelkernpresse nach Anspruch 4, dadurch gekennzeichnet, daß die Kurvenbolzen (18) mit der Stützrolle (19, 20) in der Nutkurve (21) der Nutkurvenscheibe (22) geführt sind.

6. Mantelkernpresse nach einem der Ansprüche 1 bis 5, dadurch gekennzeichnet, daß die Radialarme (7) aus in einem Rotor (10) radial gleitbar gelagerten Führungskolben (11) gebildet sind, deren inneres Ende in einer Radialbohrung (12) des Rotors (10) mündet, an welche die Unterdruckeinrichtung (29)angeschlossen ist.

7. Mantelkernpresse nach Anspruch 6, dadurch gekennzeichnet, daß die Führungskolben (11) innerhalb des Rotors (10) in Gleitlagerbüchsen (13, 14) gleitbar gelagert sind.

8. Mantelkernpresse nach einem der Ansprüche 1 bis 7, dadurch gekennzeichnet, daß die Unterdruckeinrichtung (29) eine am Rotor (10) angebrachte Vakuumscheibe (48) und eine in der Nutkruvenscheibe (22) ausgebildete Vakuumkammer (48) umfaßt, die nur über einen Teil des Umfanges der Nutkurvenscheibe (21) ausgebildet ist und in einer Entlüftungskammer (71) endet.

9. Mantelkernpresse nach einem der Ansprüche 1 bis 8, dadurch gekennzeichnet, daß der Kernstempel (31) einen in die Matrizen (3) des Matrizentisches (1) eintauchenden unteren Stempelschaft (31′) und einen vom Oberstempel (53) des Matrizentisches (1) beaufschlagbaren oberen Stempelschaft (31″) aufweist und daß beide Stempelschäfte (31′, 31″) in jeder Lage aus dem Rotor (10) herausragen.

10. Mantelkernpresse nach einem der Ansprüche 1 bis 9, wobei die Einrichtung zur Aufnahme der Kerne in die Greifeinrichtung aus einem zur Achse des Rotors der drehangetriebenen Übergabeeinrichtung parallelen Achse drehangetriebenen Zuführtisch mit auf einem Teilkreis angeordneten Aufnahmenestern für die Kerne gebildet ist, dadurch gekennzeichnet, daß die Teilkreise des Zuführungstisches und der Übergabeköpfe im Aufnahmebereich mindestens über den Abstand zweier benachbarter Matrizen (3) überlappt und die Übergabeköpfe im Überlappungsbereich auf dem Teilkreis der Aufnahmenester (63) geführt sind.

11. Mantelkernpresse nach Anspruch 10, dadurch gekennzeichnet, daß die Aufnahmenester aus einem in einer Führungsbuchse (64) geführten hohlen Außenstempel (65) und einem in diesem zentrisch geführten Innenstempel (66) gebildet sind, daß der Innenstempel (66) von einer Hubkurve (70) beaufschlagbar ist und daß zwischen dem Innenstempel (66) und dem Außenstempel (65) Druckfedern (67, 68) angeordnet sind.

12. Mantelkernpresse nach Anspruch 1, dadurch gekennzeichnet, daß die Radialarme (7) aus horizontalen Zylinderkolbeneinheiten (115) gebildet sind, die an den freien Enden ihrer Kolbenstangen (119) die Übergabeköpfe (8) aufnehmen und deren Zylinder (114) auf den freien Enden der Kolbenstangen (113) von vertikalen Zylinderkolbeneinheiten (111) angebracht sind, deren Zylinder (112) an einem drehbaren Rotor (110) der Übergabeeinrichtung (4) festangebracht sind.

13. Mantelkernpresse nach Anspruch 12, dadurch gekennzeichnet, daß die Kolbenstangen (113, 119) der horizontalen und vertikalen Zylinderkolbeneinheiten (111) bzw. (115) unabhängig voneinander betätigbar sind.

14. Mantelkernpresse nach Anspruch 5 oder 6, dadurch gekennzeichnet, daß die Zylinder (114) der horizontalen Zylinderkolbeneinheit (115) an einem Zentrierstück (117) des Rotors (110) gleitbar gelagert sind.

15. Mantelkernpresse nach einem der Ansprüche 12 bis 14, dadurch gekennzeichnet, daß zur Führung der Übergabeköpfe (8) auf dem Teilkreis (2) des Matrizentisches (1) ein mit diesem mitdrehender Kopfführungskranz (138) mit halbkreisförmigen Kopfaufnahmemulden (139) vorgesehen ist, die koaxial zu den Matrizen (3) ausgerichtet sind und in welche die entsprechend halbkreisförmig ausgebildeten Kopfteile (140) der Radialarme (7) drehend-gleitend eingreifen.

16. Mantelkernpresse nach einem der Ansprüche 12 bis 15, dadurch gekennzeichnet, daß der Übergabeeinrichtung (4) eine drehfest angeordnete Führungskurve (150) zugeordnet ist, die im Überlappungsbereich der Teilkreise (2, 141) parallel zum Teilkreis (3) des Matrizentisches (1) angeordnet ist und daß an den Radialarmen (7) Rollen (151) angeordnet sind, die entlang der Führungskurve (150) geführt werden.

17. Mantelkernpresse nach einem der Ansprüche 12 bis 16, dadurch gekennzeichnet, daß der Rotor (110) der Übergabeeinrichtung (4) mit einer Kreisringscheibe (123) mit im Bewegungsraum der Übergabeköpfe (8) angeordneten Aufnahmenestern (124) für die Kerne (9) versehen ist.

**Claims**

1. A core-encapsulating press for producing encapsulated tablets, comprising a rotatably driven die table (1) with dies (3) arranged on a partial circle, a transfer mechanism rotatably driven about an axis (6) parallel to the axis (5) of the die table with radially movable arms (7) and with transfer heads (8) arranged at the free ends thereof and capable to be brought into register with the dies (3) for transferring the cores, and a mechanism for receiving and transferring the cores, said mechanism being provided with a punch (31) for loading the cores, the partial circles of the die table and of the transfer mechanism (4) overlapping in the transfer area, and the transfer mechanism (4) being guided in the overlap area on the partial circle of the die table (1), characterized by that the mechanism for receiving and transferring the cores is formed of raisable and lowerable core punches (31),
   that the core punches comprise at their lower sides gripping devices seizing the cores (9) in the receiving mechanism (60) and bringing them in the transfer area into the lower layer of powder material formed within the associated die (3), and that the core punches (31) for pressing the cores (9) into the bottom layer of powder material are loadable by the upper punches (53).

2. A core-encapsulating press according to claim 1, wherein the gripping devices comprise vacuum tubes and underpressure mechanisms, characterized by that the vacuum tubes (38, 129) are formed within the core punches (31) and terminate at the lower side of the core punches (31).

3. A core-encapsulating press according to claims 1 or 2, characterized by that the core punches (31) are guided in boreholes of the radial arms (7) or guide pistons (11), resp., and are loaded by compression springs (37) raising the lower side of the core punches (31) above the plane of the die table (1)

4. A core-encapsulating press according to one of the claims 1 to 3, characterized by that the guide pistons (11) are provided with cam pins (18) being guided in a stationary grooved-cam curve disc (22).

5. A core-encapsulating press according to claim 4, characterized by that the cam pins (18) are guided with the support roller (19, 20) in the grooved-cam curve (21) of the grooved-cam curve disc (22).

6. A core-encapsulating press according to one of the claims 1 to 5,

characterized by that the radial arms (7) comprise guide pistons (11) slidably supported in a rotor (10), the inner ends of such guide pistons terminating in a radial bore (12) of the rotor (10), to such bore the underpressure (29) mechanism being connected.

7. A core-encapsulating press according to claim 6,
characterized by that the guide pistons (11) are slidably supported within the rotor (10) in slide-bearing bushes (13, 14).

8. A core-encapsulating press according to one of the claims 1 to 7,
characterized by that the underpressure mechanism (29) comprises a vacuum disc (48) arranged at the rotor (10) and a vacuum chamber (48) formed in the grooved-cam curve disc (22), such vacuum chamber being built up over part only of the periphery of the grooved-cam curve disc (21) and terminating in an aeration chamber (71).

9. A core-encapsulating press according to one of the claims 1 to 8,
characterized by that the core punch (31) comprises a lower punch shaft (31') entering into the dies (3) of the die table (1) and an upper punch shaft (31'') loadable by the upper punch (53) of the die table (1), and that both punch shafts (31', 31'') project in any position from the rotor (10).

10. A core-encapsulating press according to one of the claims 1 to 9, wherein the mechanism for receiving the cores comprises a feed table with receiving pockets arranged on a partial circle for the cores, such feed table being rotatably driven about an axis parallel to the axis of the rotor of the rotatably driven transfer mechanism,
characterized by that the partial circles of the feed table and of the transfer heads overlap in the transfer area at least over the distance of two adjacent dies (3), and that the transfer heads are guided in the overlap area on the partial circle of the receiving pockets (63).

11. A core-encapsulating press according to claim 10,
characterized by that the receiving pockets are formed of a hollow outer punch (65) guided in a guide bush (64) and of an inner punch (66) guided centrally therein,
that the inner punch (66) is loadable by a raise cam curve (70), and
that compression springs are provided between the inner punch (66) and the outer punch (65).

12. A core-encapsulating press according to claim 1,
characterized by that the radial arms (7) are formed of horizontal cylinder piston units (115) receiving at the free ends of their piston rods (119) the transfer heads (8), and the cylinders (114) thereof being arranged on the free ends of the piston rods of vertical cylinder piston units (111), the cylinders (112) of which are fixedly attached to a rotatable rotor (110) of the transfer mechanism (4).

13. A core-encapsulating press according to claim 12,
characterized by that the piston rods (113, 119) of the horizontal and vertical cylinder piston units (111) or (115), resp., are actuatable independently from each other.

14. A core-encapsulating press according to claim 5 or 6,
characterized by that the cylinders (114) of the horizontal cylinder piston unit (115) are supported in sliding manner at a centring piece (117) of the rotor (110).

15. A core-encapsulating press according to one of the claims 12 to 14,
characterized by that for guiding the transfer heads (8) on the partial circle of the die table (1), a head-guiding rim (138) rotating therewith and and comprising semi-circular head-receiving depressions (139) is provided, said head-receiving depressions being directed coaxially with the dies (3), and into which engage correspondingly semi-circularly shaped head sections (140) of the radial arms (7) in rotating and sliding manner.

16. A core-encapsulating press according to one of the claims 12 to 15,
characterized by that to the transfer mechanism (4), a stationary guide cam curve (150) is assigned, said cam curve being arranged in the overlap area of the partial circles (2, 141) parallely to the partial circle (3) of the die table (1), and that at the radial arms (7), rollers (151) are provided, said rollers being guided along the guide cam curve (150).

17. A core-encapsulating press according to one of the claims 12 to 16,
characterized by that the rotor (10) of the transfer mechanism (4) is provided with an annular disc (123) with receiving pockets (124) for the cores (9) arranged in the movement area of the transfer heads (8).

**Revendications**

1. Presse pour enrober des noyaux pour la fabrication de comprimés enrobés, comprenant une table de matrices (1) actionnée en rotation et comportant des matrices (3) disposées sur un cercle primitif, un dispositif de transfert tournant autour d'un axe (6) parallèle à l'axe (5) de la table de matrices avec des bras (7) amovibles radialement et des postes de transfert (8) logés aux extrémités libres de celui-ci et aptes à être amenés en coïncidence avec les matrices (3) pour le transfert des noyaux, ledit dispositif étant pourvu d'étampes (31) agissant sur les noyaux, lesdits cercles primitifs de la table de matrices et du dispositif de transfert (4) se recouvrant dans le domaine de transfert et le dispositif de transfert (4) étant guidé dans le domaine de recouvrement sur un cercle primitif de la table (1) de matrices,
caractérisée en ce que le dispositif pour la réception et le transfert des noyaux est réalisé sous la forme d'étampes (31) de noyaux levables et abaissables,

que les étampes (31) de noyaux comportent à leurs côtés inférieurs des dispositifs preneurs, qui saisissent les noyaux (9) dans la station de réception (60) et les amènent dans le domaine de transfert dans la couche inférieure de poudre formée au-dedans de la matrice associée, et

que les étampes (31) de noyaux pour pousser les noyaux (9) dans la couche inférieure de poudre peuvent être actionnées par les étampes supérieures (53).

2. Presse pour enrober des noyaux selon la revendication 1, les dispositifs preneurs comportant des tuyaux d'aspiration et des dispositifs à dépression raccordés à ceux-ci,
caractérisée en ce que les tuyaux d'aspiration (38, 129) sont agencés au-dedans des étampes (31) de noyaux et se terminent au côté inférieur des étampes (31) de noyaux.

3. Presse pour enrober des noyaux selon la revendication 1 ou 2,
caractérisée en ce que les étampes (31) de noyaux sont guidées dans des forures des bras radiaux (7) ou des pistons de guidage (11) et sont actionnées par des ressorts de pression (37), qui soulèvent le côté inférieur des étampes (31) de noyaux au-delà du plan de la table (1) de matrices.

4. Presse pour enrober des noyaux selon une des revendications 1 à 3,
caractérisée en ce que les pistons de guidage (11) sont pourvus de chevilles de came (18), qui sont guidées dans une came à rainure (22) stationnaire.

5. Presse pour enrober des noyaux selon la revendication 4,
caractérisée en ce que les chevilles de came (18) sont guidées par le rouleau d'appui (19, 20) dans la rainure (21) de la came à rainure (22).

6. Presse pour enrober des noyaux selon une des revendications 1 à 5,
caractérisée en ce que les bras radiaux (7) sont formés de pistons de guidage (11) soumis à un glissement radial, l'extrémité intérieure de ceux-ci se terminant en une forure radiale (12) du rotor (10), à laquelle est raccordé le dispositif à dépression (29).

7. Presse pour enrober des noyaux selon la revendication 6,
caractérisée en ce que les pistons de guidage (11) sont soumis à un glissement au-dedans du rotor (10) dans des coussinets lisses (13, 14).

8. Presse pour enrober des noyaux selon une des revendications 1 à 7,
caractérisée en ce que le dispositif à dépression (29) comporte un disque à vide (48) attaché au rotor (10) et une chambre à vide (48) agencée dans la came à rainure (22), ladite chambre à vide n'étant réalisée que sur une partie de la périphérie de la came à rainure (21) et se terminant en une chambre d'aération (71).

9. Presse pour enrober des noyaux selon une des revendications 1 à 8,
caractérisée en ce que l'étampe (31) de noyaux comporte une tige d'étampe inférieure (31') pénétrant dans les matrices (3) de la table (1) de matrices et une tige d'étampe supérieure (31'') actionnable de l'étampe supérieure (53) de la table (1) de matrices, et que les deux tiges d'étampe (31', 31'') font saillie en toute position hors du rotor (10).

10. Presse pour enrober des noyaux selon une des revendications 1 à 9, le dispositif pour la réception des noyaux dans le dispositif preneur étant formé d'une table d'amenage actionnée en rotation autour d'un axe parallèle à l'axe du rotor du dispositif de transfert actionné en rotation avec des cavités de réception disposées sur un cercle primitif pour les noyaux,
caractérisée en ce que les cercles primitifs de la table d'amenage et des postes de transfert se recouvrent dans le domaine de réception au moins sur la distance de deux matrices (3) voisines, et que les postes de transfert sont guidés dans le domaine de recouvrement sur un cercle primitif des cavités de réception (63).

11. Presse pour enrober des noyaux selon la revendication 10,
caractérisée en ce que les cavités de réception sont formées d'une étampe extérieure (65) creuse guidée dans une douille de guidage (64) et d'une étampe intérieure (66) guidée centralement là-dedans, que l'étampe intérieure (66) peut être actionnée par une came de levage (70) et que des ressorts de pression (67, 68) sont disposés entre l'étampe intérieure (66) et l'étampe extérieure (65).

12. Presse pour enrober des noyaux selon la revendication 1,
caractérisée en ce que les bras radiaux (7) se composent d'unités de pistons de cylindre (115) horizontales, qui reçoivent aux extrémités libres de leurs tiges de piston (119) les postes de transfert (8) et dont les cylindres (114) sont disposés sur les extrémités libres des tiges de piston (113) d'unités de pistons de cylindre (111) verticales, dont les cylindres (112) sont attachés rigidement à un rotor tournant (110) du dispositif de transfert (4).

13. Presse pour enrober des noyaux selon la revendication 12,
caractérisée en ce que les tiges de piston (113, 119) des unités de pistons de cylindre horizontales (111) et verticales (115) peuvent être actionnées indépendemment.

14. Presse pour enrober des noyaux selon la revendication 5 ou 6,
caractérisée en ce que les cylindres (114) de l'unité de pistons de cylindre (115) horizontale sont logés en manière glissante à une pièce de centrage (117) du rotor (110).

15. Presse pour enrober des noyaux selon une des revendications 12 à 14,
caractérisée en ce que pour le guidage des postes de transfert (8) sur le cercle primitif (2) de la table (1) de matrices, une couronne de guidage (138) du poste tournant avec celle-ci et avec des cavités de réception (139) pour le poste est prévue, qui sont disposées coaxialement aux matrices (3) et dans lesquelles des parties (140) du poste des bras radiaux (7) en forme demi-circulaire correspondante s'engagent en manière tournante et glissante.

16. Presse pour enrober des noyaux selon une des revendications 12 à 15,
caractérisée en ce qu'une came de guidage (150) stationnaire est associée au dispositif de transfert (4), ladite came de guidage étant disposée dans le domaine de recouvrement des cercles primitifs (2, 141) en parallèle au cercle primitif (3) de la table (1) de matrices, et que des rouleaux (151) sont fixés aux bras radiaux (7), qui sont guidés le long de la came de guidage (150).

17. Presse pour enrober des noyaux selon une des revendications 12 à 16,
caractérisée en ce que le rotor (110) du dispositif de transfert (4) est pourvu d'un disque annulaire (123) avec des cavités de réception (124) pour les noyaux (9) disposées dans le domaine de mouvement des postes de transfert (8).

Fig. 1

EP 0 349 777 B1

Fig. 2

EP 0 349 777 B1

_Fig. 3_

Fig.4

FIG 5

FIG. 6

EP 0 349 777 B1

FIG. 7

FIG. 8

FIG.9

FIG.10

EP 0 349 777 B1

FIG. 11

EP 0 349 777 B1

FIG. 12

EP 0 349 777 B1